# EUROPEAN PATENT APPLICATION

(11) **EP 1 865 698 A1**
(43) Date of publication of application: **12.12.2007**
(21) Application number: 06011933.6
(22) Date of filing: 09.06.2006
(51) Int. Cl.: H04M 3/56, H04Q 7/00

(54) **Sending of Emergency-Indication and Emergency-Reset-Indication to a group call's inactive dispatchers**

(71) Applicant: NOKIA SIEMENS NETWORKS GMBH & CO. KG, 81541 München (DE)
(72) Inventor: Wiehe, Ulrich, 36251 Bad Hersfeld (DE); Zaus, Robert Dr., 80686 München (DE)

(57) **Abstract**

The invention allows notification of an inactive dispatcher, by a device or method for notifying at least one dispatcher, who is inactive in a group call, about an emergency indication set by a group member of the group call,
wherein in case of an emergency indication set by a group member of the group call, for at the least one dispatcher who is comprised in a list of inactive dispatchers stored in a telecommunication network (Anchor-MSC),
a call to the inactive dispatcher is set up indicating to the dispatcher that for the specific group call an emergency indication was set.

## Description

The invention concerns a method and networks component for notifying at least one dispatcher that is inactive in a group call, about an emergency indication set by a group member of the group call.

In mobile networks based on the ETSI GSM or 3GPP UMTS standard (available
e.g. at www.etsi.org or www.3gpp.org), voice group calls may be set up
- to subscribers roaming in the group call area and having a subscription to a group id,
- as well as to dispatchers having a subscription to the group call reference.

A dispatcher may be a mobile subscriber or a fixed network subscriber.
When a group call is set up, a dispatcher may decide not to join the call, or, when he joined the call he may later decide to leave the group call although the call is still ongoing. In this situation where a group call is ongoing and a dispatcher of the group does not participate in the call, an emergency indication may be set by any of the active group members.

It is an object of the invention that inactive dispatchers shall be notified about the setting of the emergency indication. The object is achieved by the invention according to the claims.

The invention allows efficient notification of at least one dispatcher that is inactive in a group call about an emergency indication set by a group member of the group call.

According to an embodiment of the invention the Network (Anchor MSC, GCR) holds a list of inactive dispatchers and keeps it up-to-date during ongoing group calls. When an emergency indication is set, the network sets up an e.g. circuit switched call to the inactive dispatcher. A special calling party number e.g. consisting of the group call reference plus a postfix for emergency indication can be used to efficiently indicate to the dispatcher that for the specific group call an emergency indication was set. When the special calling party number is received by the terminal of the dispatcher with the SETUP message, the terminal can show the group call reference together with the emergency indication on its display. When the dispatcher answers the call, he is preferably immediately connected to the group call. When the dispatcher rejects the call, the network releases the call.
In an alternative variant of the invention, when the dispatcher answers the call, the network connects an announcement indicating that the emergency indication was set, and prompts the dispatcher e.g. to enter "1" to join the group call, "2" not to join the call. Depending on the dispatcher's input the network connects or releases the call.

If the inactive dispatcher is not reachable when the emergency indication occurs, the indication may be forwarded to a mailbox. This allows the dispatcher to log emergency settings.

If the dispatcher does not answer the call, the special calling party number will be stored on his device in the list of missed calls. This also allows the dispatcher to log emergency indications.

When an emergency indication is reset, again a circuit switched call is setup by the network to the inactive dispatcher. Again a special calling party number e.g. consisting of the group call reference plus a postfix for emergency reset indication is used to indicate to the dispatcher that for the specific group call the emergency indication is reset. When the special calling party number is received by the terminal of the dispatcher with the SETUP message, the terminal shows the group call reference together with the emergency reset indication on its display. When this call is answered by the dispatcher, he is immediately connected to the group call. When the dispatcher rejects the call, the network releases the call.
In an alternative variant of the invention, when this call is answered the network connects an announcement indicating that the emergency indication was reset, and prompting the dispatcher e.g. to enter "1" to join the group call, "2" not to join the group call. Depending on the dispatcher's input the network connects or releases the call.

If the dispatcher is not reachable when the emergency reset indication occurs, the indication may be forwarded to a mailbox. This allows the dispatcher to log emergency reset settings.

If the dispatcher does not answer the call, the special calling party number may be stored on his device in the list of missed calls. This also allows the dispatcher to log emergency reset indications.

Inactive dispatchers can be notified when emergency indications and emergency reset indications are set. This is independent from the inactive dispatcher's subscription (mobile network / fixed network).
Inactive dispatchers may decide to become active, i.e. easily join the group call when emergency indications are set / reset by making use of the established notification connection. Setting/Resetting of emergency indications may be logged in the dispatcher's mailbox or on his device in the list of missed calls.

Further details of the invention are described in the claims and in the following explanation of the drawing, wherein:

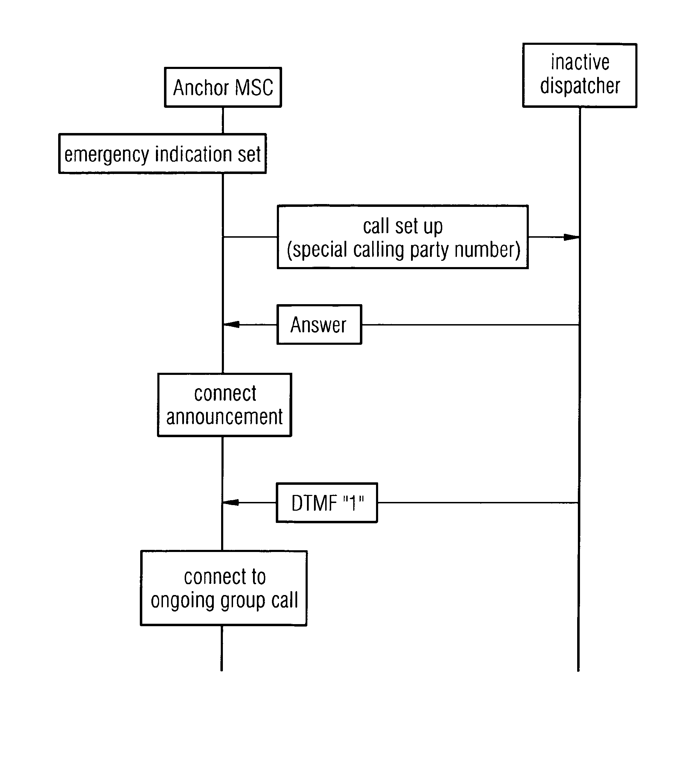

Fig. 1 schematically shows notification of at least one dispatcher, that is inactive in a group call, about an emergency indication set by a group member of the group call.

In Fig. 1 an "Anchor MSC" that receives a notification (not shown) from a group call member that an emergency indication is set, sends a call set up message to an "inactive dispatcher" stored in a list of inactive dispatchers (e.g. a list of inactive dispatchers for this group call) in a network component (e.g. in the Anchor MSC), the message e.g. comprising a special calling party number.
The inactive dispatcher sends an answer message indicating whether the dispatcher's terminal ("inactive dispatcher" in Fig. 1) wants to join the group call or not. The network provides a connect announcement with suggestions (e.g. how to join the group call by pressing "1" or to reject the group call by pressing "2" on the dispatcher's device) that the inactive dispatcher's terminal can listen to. If e.g. on the inactive dispatcher's device a key "1" was pressed, DTMF "1" is transmitted from the dispatcher's device to the network, which connects the dispatcher's device to the ongoing group call, if e.g. a key "2" was pressed the network releases the call.

Possible definitions regarding terms used in the application:
3GPP TS 42.068 defines a "dispatcher" as follows:
   Dispatcher: Particular fixed line or mobile users are identified within the
      network as dispatchers. Dispatchers shall receive all voice group calls to a
      certain group ID in a group call area (this shall be done automatically by
      the network). In addition they can initiate voice group calls to a group ID
      in a group call area.
   Dispatchers shall be connected to a voice group call by means of standard
      links via radio or via an ISDN. They shall be called by their ISDN or MSISDN
      number, respectively. When dispatchers initiate voice group calls, they
      shall call a particular MSISDN number which is related to a group ID and
      group call area. Dispatchers using the GSM network can be located outside of
      this group call area.
   The identities of the dispatchers are exclusively predefined in the network
      by the service provider. There will be none or up to five dispatchers
      involved in a particular voice group call.

"Inactive dispatcher": a dispatcher, that does not (yet) participate in a group
call.

Emergency notification: In a group call only one participant can be talker at any time. If an other participant wants to be talker, her must either wait until the talking participant gives up his role as talker or he can use a higher priority than the current talker to get talker. The following talker priorities are defined:
normal subscriber, privileged subscriber, emergency subscriber.
If a participant with talker priority "emergency subscriber" gets talker,
all participants of the group call should be informed. This information (emergency notification) can, according to the prior art, currently only be provided by active participants and active dispatchers of the group call.

## Claims

1. Method for notifying at least one dispatcher who is inactive in a group call, about an emergency indication set by a group member of the group call,
wherein, in case of an emergency indication set by a group member of the group call,
for at the least one dispatcher who is identified in a list of inactive dispatchers stored in a telecommunication network component (A-MSC; GCR),
a call to the inactive dispatcher is set up indicating to the dispatcher that for the specific group call an emergency indication was set.

2. Method according to claim 1,
wherein a call setup message indicates to the dispatcher that for the specific group call an emergency indication was set and wherein the call setup message identifies the group call.

3. Method according to any of the preceding claims,
wherein a mobile telecommunication network component (A-MSC-GCR) stores a list of inactive dispatchers and keeps it up-to-date during at least one ongoing group call.

4. Method according to any of the preceding claims,
wherein the call that is set up is a circuit switched call.

5. Method according to any of the preceding claims,
wherein a calling party number in a set up message for setting up the call comprises a group call reference identifying the group call and a postfix for the emergency indication.

6. Method according to any of the preceding claims,
wherein when the special calling party number is received by a terminal of the dispatcher with a set up message ("SETUP"), the terminal shows the group call reference together with the emergency indication on its display.

7. Method according to any of the preceding claims,
wherein when the dispatcher's terminal (Fig. 1: "inactive dispatcher") answers the call, it is immediately connected to the group call.

8. Method according to any of the preceding claims,
wherein when the dispatcher's terminal rejects the call, the network releases the call.

9. Method according to any of the preceding claims,
wherein when the dispatcher's terminal answers the call,
the network connects an announcement indicating that the emergency indication was set,
and the network prompts the dispatcher's terminal instructions on how to join or release the group call and,
depending on the dispatcher's input the network connects or releases the call.

10. Method according to any of the preceding claims,
wherein if the inactive dispatcher is not reachable when the emergency indication occurs, the indication may be forwarded to a mailbox, preferably to allow the dispatcher to log emergency settings.

11. Method according to any of the preceding claims,
wherein if the dispatcher does not answer the call, the transmitted calling party number will be stored on his device in a list of missed calls, especially to allow the dispatcher to log emergency indications.

12. Method according to any of the preceding claims,
wherein when an emergency indication is reset, again a circuit switched call is setup by the network to the inactive dispatcher and again a special calling party number preferably consisting of the group call reference plus a postfix for emergency reset indication is used to indicate to the dispatcher that for the specific group call the emergency indication is reset.

13. Method according to any of the preceding claims,
wherein the telecommunication network is or comprises a mobile telecommunication network, especially a cellular mobile telecommunication network.

14. Mobile telecommunication network component (A-MSC- GCR), comprising
- a store (A-MSC- GCR) for storing a list of inactive dispatchers for at least one group call,
- a receiver (A-MSC; GCR) for receiving an emergency indication set by a group member of the group call,
- a sender (A-MSC; GCR) for notifying at least one dispatcher, who is inactive in a group call, about an emergency indication set by a group member of the group call, by (A-MSC; GCR) setting up a call to the inactive dispatcher indicating to the dispatcher that for the specific group call an emergency indication was set.
